# EUROPEAN PATENT APPLICATION

(11) **EP 4 831 581 A1**
(43) Date of publication of application: **28.10.2026**
(21) Application number: 25171940.7
(22) Date of filing: 23.04.2025
(51) Int. Cl.: G01B 11/06, G01B 11/24, G01J 3/28, G01N 21/27

(54) **OPTICAL SENSOR**

(71) Applicant: LMI Technologies Inc., Burnaby, BC V5J 5J8 (CA)
(72) Inventor: Keränen, Heimo, 90240 Oulu (FI)
(74) Representative: EIP

(57) **Abstract**

The invention relates to the field of optical sensors, in particular to sensors for measuring the displacement, two-dimensional profile or three-dimensional shape of a measurement object and/or for colour or multispectral measurement of the surface of the measurement object. The sensor of the present invention projects measurement light of multiple wavelength bands into a measurement plane such that a different wavelength or combination of wavelengths of measurement light is in focus at each point along a first axis extending longitudinally from the sensor within the measurement plane. The spectral content of measurement light reflected from the surface of the measurement object is used to determine the displacement or profile of the measurement object.

## Description

### Technical Field

The invention relates to the field of optical sensors, in particular to sensors for measuring the displacement, two-dimensional profile or three-dimensional shape of a measurement object and/or for colour or multispectral measurement of the surface of the measurement object.

### Background

Optical sensors for measuring the displacement, 2D profile or 3D shape of a measurement object project measurement light onto the measurement object and measure certain properties of the measurement light reflected from the surface of the measurement object in order to determine the displacement, 2D profile or 3D shape of the measurement object.

Many such sensors suffer from decreased performance on different types of surfaces which reflect less measurement light back towards the sensor, e.g. due to low reflectance or a high orientation.

Some higher accuracy sensors project a series of spatially distinct points onto the surface of the measurement object, rather than a continuous line, in order to improve accuracy since the isolation of measurement light reflected from adjacent points on the line can be imperfect. However, this arrangement reduces the resolution of the measurement along the nominal measurement line due to reduced sampling of the surface of the measurement object by the series of distinct points compared to a continuous line.

Furthermore, the combination of displacement information, 2D profile information or 3D shape information with spectral reflectance information is often needed for full quality inspection in industrial manufacturing processes. However, traditional displacement, 2D and/or 3D sensors cannot provide simultaneous spectral reflectance measurement of the surface of an object being measured and traditional multispectral or hyperspectral imaging systems alone cannot obtain displacement, 2D profile, or 3D shape information.

### Summary of the Invention

The invention relates to an optical sensor for measuring a displacement or profile of a measurement object relative to the sensor.

The sensor includes a light source configured to emit polychromatic measurement light, the polychromatic measurement light comprising a plurality of wavelength bands. **The** sensor also includes a first aperture array arranged to receive measurement light from the light source.

First dispersive optics of the sensor are arranged to receive measurement light passing through the first aperture array and to disperse received measurement light across a first axis on a first diffractive or scattering surface. Different wavelength bands of the plurality of wavelength bands are dispersed across a first region of the first diffractive or scattering surface from different apertures of the first aperture array such that a different wavelength or combination of wavelengths of measurement light is in focus at each point along the first axis. By pairing the first aperture array positioned between the light source and measurement object with a second aperture array positioned between the measurement object and an image sensor for measuring light reflected from the surface of the measurement object, only measurement light reflected from the intersection of the measurement object and a measurement plane reaches the image sensor.

An objective lens assembly of the sensor is configured to image the first region of the first diffractive or scattering surface onto a measurement plane. At each point in the measurement plane, a different wavelength or combination of wavelengths of measurement light is in focus at each point along the first axis as in the first region of the first diffractive or scattering surface.

The objective lens assembly is also configured to focus measurement light reflected from the intersection of the measurement plane and the surface of a measurement object onto a second diffractive or scattering surface.

The sensor further includes second dispersive optics arranged to receive measurement light diffracted from the second diffractive or scattering surface and configured to disperse the received measurement light across a second aperture array and focus the measurement light within the apertures of the second aperture array such that distinct wavelength bands of the measurement light pass through each aperture of the second aperture array.

A measurement spectrograph is arranged to receive measurement light passing through the second aperture array and configured to spatially disperse the received measurement light of each wavelength band across an image sensor such that the position on the image sensor of the peak wavelengths of received measurement light within each band corresponds to the intersection of the measurement plane and the surface of the measurement object.

According to a first embodiment of the invention, the first and second aperture arrays are arrays of slits. Measurement light passing through each slit is incident and spatially dispersed across a common region of the measurement plane, within which different combinations of wavelengths from the plurality of wavelength bands are in focus at different positions along the first axis of the measurement plane.

By adjusting the transmission power of each wavelength band independently, a high dynamic range of measurement light is projected into the measurement plane an onto the surface of the measurement object. Within the measurement spectrograph, the optimal wavelength band or combination of wavelength bands may be selected at each point along a second axis of the measurement plane, perpendicular to the first axis, such that the signal-to-noise ratio is maximised within the selected wavelength band(s) without saturating the sensor, allowing the sensor to adapt to different surface types, colours, and orientations.

Alternatively, by providing uniform transmission power of each wavelength band, a multi spectral image of the measurement object may be generated based on the received measurement light as the measurement plane is scanned across the surface of the measurement object.

According to a second embodiment of the invention, the first and second aperture arrays are pinhole arrays. The pinholes may be arranged in rows, each row extending across the aperture array in a first direction such that the apertures of each row are not overlapping with apertures of any other adjacent row in a second direction perpendicular to the first direction. In this manner, measurement light is projected onto the surface of the measurement object in a line such that no adjacent points on the line are of the same wavelength band. This improves the isolation of measurement light received from adjacent points on the surface of the measurement object within the measurement spectrograph, thereby improving the accuracy of the optical sensor.

A second aspect of the invention relates to a method of measuring the displacement and/or profile of the surface of a measurement object using the optical sensor described above. The method comprises measuring a peak wavelength of light within one or more wavelength bands of measurement light reflected from the intersection of the measurement plane and a surface of a measurement object, and determining the displacement and/or profile of the surface of the measurement object based on the one or more measured peak wavelengths.

Further advantageous features of the invention are set out in the claims and the detailed description below.

### Brief Description of the Drawings

Figure 1 depicts a sensor according to a first embodiment of the invention.
Figure 2 depicts the spatial distribution of spectra generated by the first dispersive optics on the first diffractive or scattering surface.
Figure 3 depicts an exemplary light source that may be part of the sensor of the present invention.
Figure 4 depicts an exemplary measurement spectrograph that may be part of the sensor of the present invention.
Figure 5 depicts a sensor according to a second embodiment of the invention.

### Detailed Description of the Invention

The invention relates to optical sensors for displacement or profile measurement of a measurement object. Such sensors may be used to scan the surface of the measurement object in order to determine the shape of the surface of the measurement object.

In an optical sensor according to the invention, measurement light passes through an aperture array, e.g. an array of pinholes or slits, onto first dispersive optics, e.g. a first diffraction grating.

The first dispersive optics disperses the measurement light across a first axis on the surface of a first diffractive or scattering surface. The measurement light from each aperture is dispersed across a different range of positions along the first axis. Therefore, in a first region on the surface of the first diffractive or scattering surface, a different, preferably non-spectrally overlapping, wavelength band of the measurement light is incident from each aperture. As a result, at each position along the first axis, a different wavelength or combination of wavelengths is incident.

An object lens assembly images the first region of the surface of the first diffractive or scattering surface onto a measurement plane. Therefore, like the light incident on the surface of the first diffractive or scattering surface, the light in focus at each point along a first axis of the measurement plane comprises a different wavelength or combination of wavelengths. In a preferred embodiment, when the optical sensor is in use, a measurement object is positioned such that its surface intersects the measurement plane. Measurement light is reflected from the intersection of the surface of the measurement object and the measurement plane. Measurement light reflected back towards the objective lens assembly is focused by the objective lens assembly onto the surface of a second diffractive or scattering surface.

Measurement light diffracted from the second diffractive or scattering surface is incident on second dispersive optics, which is configured to focus received measurement light within the apertures of a second aperture array such that measurement light of a single wavelength band passes through each aperture of the second aperture array. The second diffractive or scattering surface, second dispersive optics and second aperture array essentially function as an inverse of the first aperture array, first dispersive optics and first diffractive or scattering surface. Each aperture of the first aperture array has a corresponding aperture in the second aperture array. Measurement light that passes through a given aperture in the first aperture array and is reflected from the surface of the measurement object, at the intersection of the measurement object and the measurement plane, passes through a corresponding aperture in the second aperture array (and only through that corresponding second aperture). This ensures that only measurement light reflected from the intersection of the measurement object and the measurement plane finally passes to a measurement spectrograph, where the spectral content of the measurement light is determined.

It will also be understood that for each surface point on the second grating 104 there exists a corresponding point in the measurement plane 106 and on the surface of the third grating 107 at which the same wavelength or combination of wavelengths of measurement light is in focus.

Since a different wavelength of combination of wavelengths of measurement light is in focus at each position along the first axis of the measurement plane, the position along the first axis at which the measurement object intersects the measurement plane corresponds to the wavelength or combination of wavelenths that is received at the measurement spectrograph with the highest intensity.

The same measurement can be repeated for measurement light in focus at a range of positions along a second axis of the measurement plane, which is perpendicular to the first axis. These measurements at other positions along the second axis allow for a two-dimensional profile of the measurement object to be determined. By scanning surface of the measurement object along a third axis of the measurement plane, e.g. perpendicular to both the first and second axes, a three-dimensional model of the surface of the measurement object can be constructed.

Optical sensors according to the invention are described in more detail below with respect to the drawings.

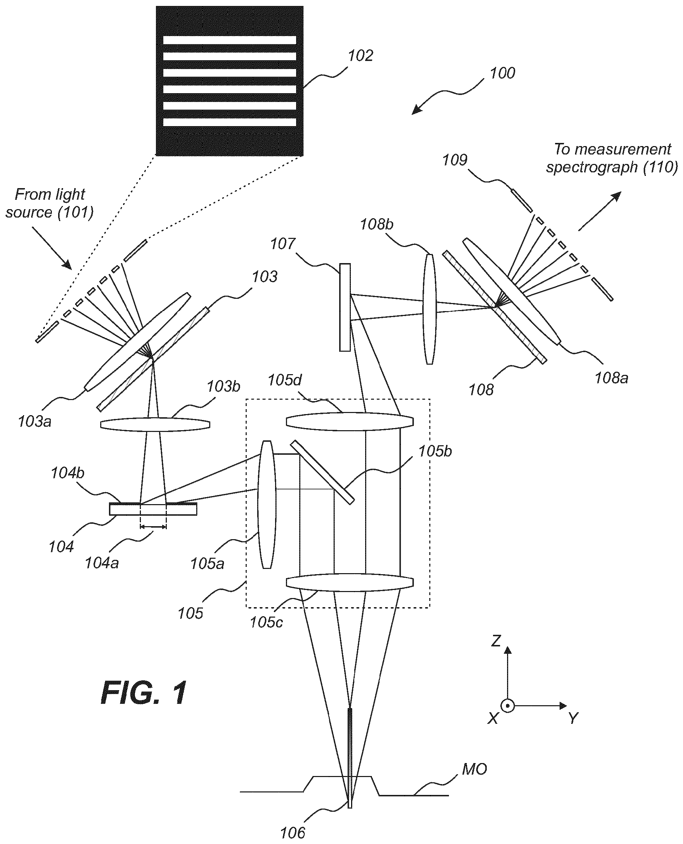

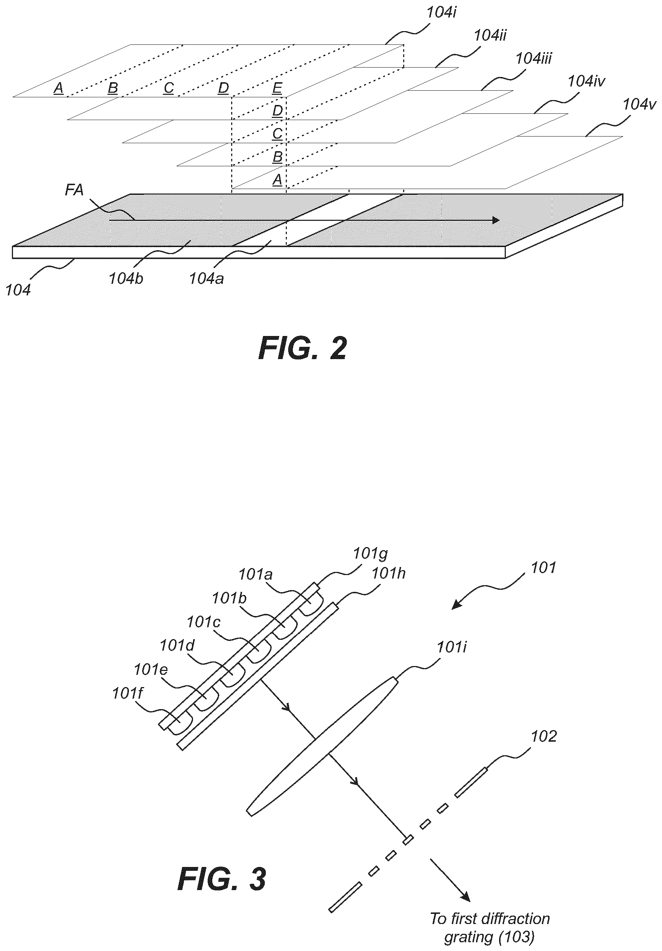

Figure 1 depicts an optical sensor 100 according to a first embodiment of the invention. A light source 101 emits measurement light, which is made up of a plurality of different wavelength bands. The light source 101 is depicted in more detail in Figure 3, described below. The light source 101 may include, for example, a "white" light area light source, i.e. a light source where all of the wavelength bands are emitted across the surface of the area light source. Alternatively, the light source may be made up of a plurality of sub-light sources that each emit a smaller number of wavelength bands of measurement light, e.g. a single wavelength band.

The light source 101 illuminates an aperture array 102, which in the embodiment of Figure1 is an array of slits, such that at least one wavelength band of the measurement light is passing through each slit. For example, a different wavelength band may pass through each slit, or all wavelength bands may pass through all slits. In the first embodiment of the invention, the sensor 100 projects a continuous line of measurement light onto the surface of the measurement object for the purpose of measuring the profile of the measurement object. The sensor 100 may also be used a displacement sensor, in which case a single point of light may be projected onto the surface of the measurement object instead of a line by replacing the slit array 102 described below with an array of pinhole apertures aligned in a single column.

First dispersive optics 103 are arranged such that measurement light passing through the slits is incident on the dispersive optics 103, e.g. a diffraction grating, and the measurement light of each wavelength band is dispersed by the dispersive optics 103 onto a first diffractive or scattering surface 104. This is depicted in more detail in Figure 2. First dispersive optics 103 may include a first diffraction grating as the dispersive element and intermediate optics 103a, 103b, e.g. lenses. Alternatively, prisms, or a combination of gratings and prisms may be used to provide the required dispersion of measurement light. Similarly, more or less than the lenses 103a and 103b may be used.

Figure 2 shows the dispersed measurement light 104i-104v from different slits of a slit array such as slit array 102. Spectrum 104i corresponds to measurement light from a first slit, spectrum 104ii corresponds to measurement light from a second slit, and so on. Within each spectrum 104i-v, measurement light is dispersed along the first axis FA, i.e. within each spectrum, at each position along the first axis FA, a different wavelength of measurement light is incident. In Figure 2 the different spectra 104i-v of dispersed measurement light are shown vertically spaced apart from each other and from the first diffractive or scattering surface 104 for illustrative purposes only. In reality, each spectrum 104i is coincident with the surface of the diffraction grating 104. In the illustration of Figure 2, five spectra 104i-v are shown. However, it will be understood that the following discussion may be generalised to an arbitrary number of slits. Each of the spectra 104i-v is made up of five different wavelength bands A-E. The arrangement of slits in the slit array and the properties of the first dispersive optics are selected such that a different wavelength band of each spectrum 104i-v is incident on the first region 104a of the first diffractive or scattering surface. As a result, at each position along the first axis FA, a different wavelength or combination of wavelengths is incident. Since a single wavelength band is incident on the region 104a from each slit of the slit array, it is not necessary for the full spectrum A-E of measurement light to pass through each slit. Indeed, as explained in more detail with respect to Figure 3, the light source may be configured to project measurement light of a single wavelength band through each slit of the slit array.

As shown in Figure 2, the surface of the first diffractive or scattering surface 104 may be covered by a mask or masks 104b outside of the region 104a. In this manner, measurement light not incident in the region 104a is attenuated. Alternatively, the first diffractive or scattering surface 104 may be the same size as the region 104a.

At least part of the measurement light incident on the first diffractive or scattering surface 104 is diffracted towards an objective lens assembly 105. The first diffractive or scattering surface 104 is preferably a diffraction grating that is configured such that measurement light diffracted from one or more diffraction modes is directed towards the objective lens assembly 105. Where a diffraction grating is used, it may be reflective grating or a transmission grating. However, a simple scattering surface may also be used such that some of the measurement light incident on first region 104a of the first diffractive or scattering surface 104 is directed towards the objective lens assembly 105.

The objective lens assembly 105 is configured to image the region 104a of the diffractive surface of the first diffractive or scattering surface 104 onto a measurement plane 106. Consequently, since a different combination of wavelengths is incident at each position along the first axis FA of the first diffractive or scattering surface within the region 104a, a different combination of wavelengths is in focus at each position along a first axis of the measurement plane 106, e.g.. parallel to the Z-axis as shown in Figure 1. The measurement plane may be defined as the plane in which the region of the diffraction grating 104a is focused by the objective lens assembly 105. The size of the measurement plane in the Z-direction depends on the focal length of the objective lens assembly 105. In practice, due to imperfections in real-world optical systems, the measurement plane 106 has a non-zero thickness measured perpendicular to the first axis, e.g. parallel to the Y-axis as shown in Figure 1.

In use, the sensor is arranged such that the measurement plane 106 intersects the surface of a measurement object MO and measurement light is reflected from the surface of the measurement object MO with the highest intensity at the intersection of the measurement object MO and the measurement plane 106, where measurement light is in focus. At least part of the measurement light reflected from the surface of the measurement object MO is reflected back towards the objective lens assembly 105, where it is focused by the objective lens assembly 105 onto the surface of a second diffractive or scattering surface 107. The second diffractive or scattering surface 107 is configured to diffract or scatter at least part of the measurement light focused onto it by the objective lens assembly towards second dispersive optics 108. Like the first diffractive or scattering surface 104, the second diffractive or scattering surface 107 is preferably a diffraction grating that is configured such that measurement light diffracted from one or more diffraction modes is directed towards the second dispersive optics 108. Where a diffraction grating is used, it may be reflective grating or a transmission grating. However, a simple scattering surface may also be used such that some of the measurement light incident on second diffractive or scattering surface 107 is directed towards the second dispersive optics 108.

Like the first dispersive optics 103, second dispersive optics 108 may include a first diffraction grating as the dispersive element and intermediate optics 108a, 108b, e.g. lenses. Second dispersive optics 108 receives measurement light diffracted or scattered from the second diffractive or scattering surface and disperses the received measurement light across the surface of a second slit array 109 such that measurement light of a single wavelength band passes through each slit of the second slit array 109.

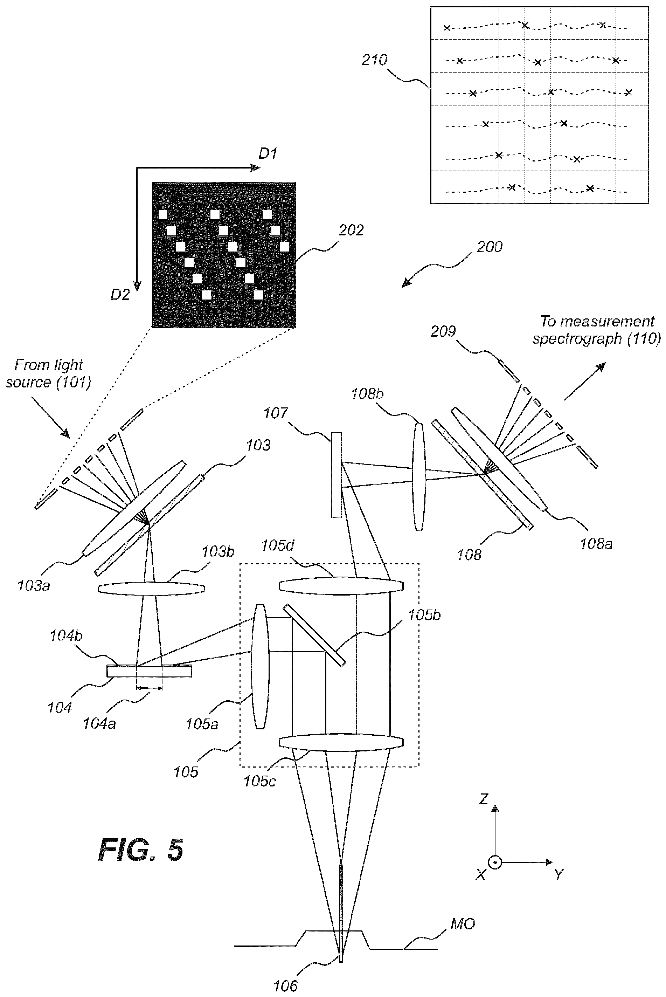

The second diffractive or scattering surface 107, second dispersive optics 108, and second slit array 109 act in essentially the inverse manner to first slit array 102, first dispersive optics 103 and first diffractive or scattering surface 104. This arrangement ensures that only measurement light of the desired wavelength bands passes from the second slit array 109 to the measurement spectrograph 110. The optical path between the second diffractive or scattering surface 107 and second slit array 109 may include one or more lenses or other optical components, e.g. lenses 108a, 108b shown in Figure 1, for appropriately focusing the measurement light of each wavelength band onto the slit array 109. The slits of the first slit array 102 and the second slit array 109 are not necessarily exactly aligned in the direction of the X-axis, as shown in Figure 5. The sensor of the present invention still works if the slits are oriented along some angle in the XZ plane. Such an arrangement can be compensated for by post-processing of the signal output by the sensor, e.g. in control software.

In one example, as shown in Figure 1, the objective lens assembly 105 includes an input lens 105a, a reflector 105b, an objective lens 105c, and an output lens 105d. The input lens 105a and objective lens 105c image the region 104a of the surface the first diffractive or scattering surface 104 onto the measurement plane 106 via the reflector 105b. The measurement plane 106 is imaged by the objective lens 105c and output lens 105d onto the surface of the second diffractive or scattering surface 107. Alternative arrangements may be used, for example where the reflector 105b is positioned in the path of measurement light reflected from the measurement plane 106 instead of in the path of measurement light projected onto the measurement plane from the light source 101. In general, any arrangement of components that fulfils the functions described above may be used.

Where the objective lens assembly 105 has the same focal length for measurement light diffracted from first diffractive or scattering surface 104 and focused onto the measurement plane 106 and for reflected measurement light received from the measurement plane 106 focused on the second diffractive or scattering surface 107, the arrangement of the first slit array 102, first dispersive optics 104 and first diffractive or scattering surface 104 (as well as any intermediate lenses 103a, 103b or other optical components in the optical path between first slit array 102 and first diffractive or scattering surface 104) may be identical to the arrangement of the second slit array 109, second dispersive optics 108 and second diffractive or scattering surface 107 (as well as any intermediate lenses 108a, 108b or other optical components in the optical path between the second slit array 109 and the second diffractive or scattering surface 107). Alternatively, the focal length of lenses of the input lens 105a, objective lens 105c and output lens 105d may not all be the same. In this configuration, the sensor of the present invention still functions as described above and below, but the arrangement of the first slit array 102, first dispersive optics 104 and first diffractive or scattering surface 104 (as well as any intermediate lenses 103a, 103b or other optical components in the optical path between first slit array 102 and first diffractive or scattering surface 104) will not be identical to the arrangement of the second slit array 109, second dispersive optics 108 and second diffractive or scattering surface 107 (as well as any intermediate lenses 108a, 108b or other optical components in the optical path between the second slit array 109 and the second diffractive or scattering surface 107).

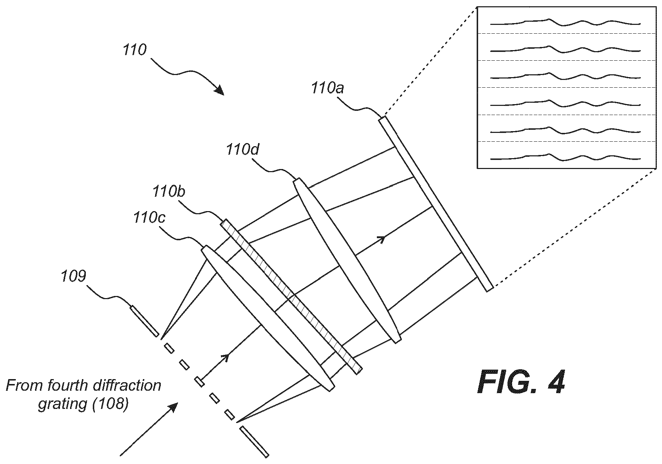

The measurement light passing through the second slit array 109 is received by a measurement spectrograph 110, described in more detail with respect to Figure 4 below, which measures the peak wavelength of measurement light within each wavelength band that passes through the second slit array 109. Since the in-focus wavelengths of measurement light within each measurement band are distributed over the first direction of the measurement plane 106, the peak wavelength of measurement light within each measurement band that is reflected from the surface of the measurement object depends on the position along this first direction where the surface of the measurement object intersects the measurement plane. Therefore, by measuring the peak wavelength within each measurement band, the distance of the measurement object MO from the sensor 100 can be determined.

Figure 3 depicts the light source 101 in more detail. The light source 101 shown in Figure 2 is one example of a light source using rows of sub-light sources each of which has a different emission spectrum, that may be used with the sensor 100. Other examples that may alternatively be used include white light area sources, as described above. The light source 101 of Figure 2 includes a plurality of sub-light sources 101a-101f, which are arranged on a substrate 101g, e.g. a PCB, in rows. Each row of sub-light sources 101a-101f includes a plurality of sub-light sources having essentially the same emission spectrum, e.g. each of the sub-light sources 101a-101f is a LED and the LEDs in each row are of the same type/colour. In the example depicted in Figure 3, a diffuser 101h is arranged adjacent to the sub-lights sources 101h to provide more uniform light intensity across each row of sub-light sources 101a-101f, i.e. to smooth out peaks and troughs in emission power along each row. Other type of beam homogenizing optical systems than a diffuser may be used. A light collection lens 101i may be positioned in the path of measurement light between the diffuser 101h and the first slit array 102 in order to focus measurement light from the sub-light sources 101a-101f onto the first slit array.

Each row of sub-light sources 101a-101f may emit measurement light including one or more of the wavelength bands of measurement light projected onto the region 104a of the first diffractive or scattering surface 104 and thus focused onto the measurement plane 106. As a result, the power of one or more wavelength bands may be adjusted independently relative to the power of other wavelength bands. This allows for measurements to be made with a high dynamic range. This arrangement is particularly advantageous for measuring the displacement/profile at different points on a measurement object that may be darker, poorly reflective, or highly tilted relative to the angle of incidence of measurement light. While high power measurement light projected onto a measurement object may saturate the sensor at parts of the measurement object that reflect measurement light well, e.g. those close to perpendicular to the angle of incidence of measurement light, the lower power measurement bands still allow for the collection of measurement light reflected from the surface without saturating the sensor in the region of the sensor onto which that wavelength band is projected (as explained in more detail below). On the other hand, the lower power measurement band may not produce a sufficiently strong signal on the surface of the sensor for poorly reflective surface, e.g. those that are closer to parallel to the angle of incidence of measurement light. In this case, the higher power measurement band(s) no longer saturate the sensor and can provide a clear signal. The use of multiple measurement bands of differing power allows for the displacement/profile to be determined based on the optimal wavelength band or bands, i.e. that which provides the best signal-to-noise ratio without saturating the sensor. In particular, the displacement or profile of the measurement object may be determined using measurement light of different wavelength bands, or different combinations of wavelength bands, at different points within the measurement plane (i.e. different points on the surface of the measurement object). In other words, at each point within the measurement plane corresponding to a different column of pixels on the image sensor, the wavelength band or combination of wavelength band with an optimum power level, i.e. one that provide a high signal-to-noise ratio without saturating the sensor, is selected and used for the displacement or profile measurement.

Alternatively, the power output of each row of sub-light sources 101a-101f may be controlled to provide a relatively uniform spectral power distribution, in which case the absolute amount of reflected measurement light received and measured at the measurement spectrograph 110 may also be used to determine spectral reflectance measurements for the measurement object MO and may ultimately be used to generate multi or hyperspectral images of the surface of the measurement object at the same time as measuring the profile and 3d shape of the measurement object.

The measurement spectrograph 110 of sensor 100 is depicted in more detail in Figure 4. The measurement spectrograph 110 shown in Figure 4 is one example of a measurement spectrograph based on a diffraction grating that may be used with the sensor 100. Alternatively, spectrographs based on prisms, or with other arrangements than that shown in Figure 4 may be used provided that they can perform the function of measuring the peak wavelengths of measurement within each wavelength band in the reflected measurement light, as described in more detail below.

The measurement spectrograph 110 includes an image sensor 110a, e.g. a monochrome area camera, onto which measurement light is projected by the spectrograph diffraction grating 110b and other optics, e.g. lenses 110c, 110d of the measurement spectrograph 110.

The surface of the image sensor 110a is also shown in Figure 4. The solid lines on the surface indicate the location of intensity peaks in the reflected measurement light of each wavelength band projected onto the surface of the image sensor 110a by the measurement spectrograph optics 110b-d. The dashed lines indicate different regions on the surface of the image sensor 110a onto which the different wavelength bands of measurement light may be projected. Within each region, the vertical position (as shown in the drawing) of the intensity peak is related to the wavelength of the intensity peak and therefore the Z-position of the surface of the measurement object MO within the measurement plane 106, and the horizontal position (as shown in the drawing) of each point corresponds to the X-position of the measurement plane 106 from which the measurement light was reflected. Therefore, by measuring the vertical position within each region of the image sensor at which measurement light is received with the highest intensity at each horizontal position on the image sensor, the location within the measurement plane 106 at which the surface of the measurement object MO intersects the measurement plane 106 can be determined.

Furthermore, by measuring the profile of the measurement object MO at different positions on the surface of the measurement object, which are separated by a known displacement and possible orientation change, the 3D shape of the surface of the measurement object can be reconstructed.

In addition to measuring the displacement and/or profile of the surface of the measurement object MO, the sensor 100 may also be used to capture or measure spectral properties, e.g. reflectance , of the surface of the measurement object within each of the wavelength bands of measurement light. The sensor 100 may perform this measurement of spectral properties simultaneously with the displacement/profile measurement. For this purpose, it is preferable for all of the wavelength bands of measurement light to have essentially uniform power such that the reflectance data can be accurately combined to create an image. For example, where red, green, and blue wavelength bands of visible light are used, a colour image of the surface of the measurement object may be produced simultaneously as the profile of the measurement object is scanned. Where more wavelength bands of measurement light are used, multispectral reflectance data may be obtained. In an alternative embodiment, the sensor may be used only to measure the spectral properties of the surface of measurement object, e.g. obtain a colour or multispectral image, without measuring the displacement or profile of the measurement object. However, even where only the spectral properties of the surface of the measurement object are output, the distance may still be measured by the sensor in order to calibrate the measurement of spectral properties, as explained in more detail below. The sensor of the present invention is particularly advantageous for obtaining colour or multispectral images of the surface of the measurement object because the image produced is in focus at all points within the measurement plane, i.e. independently of the distance of the surface of the measurement object from the sensor within the measurement plane. This kind of always-in-focus imaging is not possible with conventional imaging methods.

When measuring the spectral properties of the surface of the measurement object, the received intensity is dependent on the optical power and the spectral content of the measurement light projected onto the measurement object, the optical efficiency of the sensor at different wavelengths and the spectral reflectance of the surface of the measurement object, i.e. what is being measured. As a result, the received intensity is also highly dependent on the distance of the measurement object from the sensor. The effects of the optical efficiency and the illumination power may be compensated for by calibration of the sensor. This calibration may be done by measuring the received intensity from a surface that has known reflectance properties (e.g. white surface) at different measurement distances. The reference sample can be an absolute reference with accurately known reflectances in all wavelengths of the wavelength bands of measurement light or it can be a reference surface where the relative reflectances in all wavelengths of the wavelength bands are known. The calibration process may also include measuring the wavelength peak within each band for all distances within the measurement region. The smoothness of the spectral sensitivity of the sensor or the smoothness of the spectral content of the illumination intensity are not critical or needed since these can be corrected by the calibration.

The sensor of the present invention may also be used to measure the distance and colour of multi-layer films, and to determine the thickness of films following similar. In the case of multilayer films, multiple local maxima may be present in the spectral measurement of reflected measurement light corresponding to reflection of the measurement light from the interface of each layers of the multilayer film.

Figure 5 depicts a sensor 200 according to a second embodiment of the invention. In contrast to the sensor 100 of Figure 1 described above, the sensor 200 uses arrays 202, 209 of point or pinhole apertures instead of slit arrays 102, 109. Sensors that measure the displacement of a measurement object using only a single point or an array of discrete points of measurement light are generally more accurate than those that use a continuous line since each point is spatially isolated from any other points. However, using a single point or an array of discrete points significantly reduces the resolution of the sensor in the direction along which the points are distributed, because the displacement of points onto which measurement light is not projected cannot be measured at all. The sensor 200 of Figure 5 uses the aperture arrays 202, 209 to project a line measurement light into the measurement plane 106, i.e. onto the measurement object, where each adjacent point on the line has a wavelength from a different one of the non-overlapping wavelength bands of measurement light. In other words, each point of projected measurement light is spectrally isolated from neighbouring points, and spatially isolated from other points with a wavelength in the same wavelength band. By also using spectral isolation between adjacent points, the points can be spatially arranged more closely than if spatial isolation alone were used. **The** sensor of this embodiment therefore reduces cross-talk between adjacent points, increasing the accuracy of the displacement measurement at each point, while allowing increased resolution along the projected line of points.

Figure 5 shows an exemplary arrangement of the point/pinhole apertures on the aperture array 202. As in the first embodiment, where each slit in the slit array corresponds to a different wavelength band, each position along direction D2, as shown in Figure 5, corresponds to a different wavelength band. Each position along direction D1 corresponds to a different position along the line of points projected into the measurement plane perpendicular to the direction over which the points are spectrally dispersed within the measurement plane 106, i.e. each position along direction A on the aperture array 202 corresponds to a different position along the X-axis as shown in Figure 5.

The arrangement of the apertures in the aperture array 202 is exemplary. Any other arrangements of point or pinhole apertures may be used provided that no apertures are directly adjacent along the direction corresponding to spatial position within the measurement plane (i.e. direction A).

In a further alternative, other types of apertures than points or pinholes may also be used. For example, a combination of pinhole apertures and slits may be used. In this way, some wavelength bands may be used to generate high accuracy displacement measurements by spatially and spectrally isolating discrete points in the measurement plane, while other wavelengths bands may be projected into the measurement plane along a continuous line by slit apertures in order to provide continuous spectral reflectance data, e.g. for simultaneously generating an image of the surface of the measurement object.

## Claims

1. An optical sensor (100) comprising:
a light source (101) configured to emit polychromatic measurement light, the polychromatic measurement light comprising a plurality of wavelength bands;
a first aperture array (102) arranged to receive measurement light from the light source;
a first dispersive optics (103) arranged to receive measurement light passing through the first aperture array and to disperse received measurement light across a first axis (FA) on a first diffractive or scattering surface (104), wherein different wavelength bands of the plurality of wavelength bands dispersed across a first region (104a) of the first diffractive or scattering surface from different apertures of the first aperture array such that a different wavelength or combination of wavelengths of measurement light is in focus at each point along the first axis;
an objective lens assembly (105) configured to image the first region of the first diffractive or scattering surface onto a measurement plane (106), and to focus measurement light reflected from the intersection of the measurement plane and the surface of a measurement object onto a diffractive surface of a second diffractive or scattering surface (107);
a second dispersive optics (108) arranged to receive measurement light diffracted from the second diffractive or scattering surface and configured to disperse the received measurement light across a second aperture array (109) and focus at least part of the measurement light within the apertures of the second aperture array such that measurement light of a single wavelength band passes through each aperture of the second aperture array; and
a measurement spectrograph (110) arranged to receive measurement light passing through the second aperture array and measure the spectral content of received measurement light within each measurement band.

2. The optical sensor (100,200) of claim 1, wherein the measurement spectrograph (110) is configured to disperse the received measurement light of each wavelength band across an image sensor (110a) such that the position on the image sensor of the peak wavelengths of received measurement light within each band corresponds to the intersection of the measurement plane and the surface of the measurement object.

3. The optical sensor (100) of claim 1 or 2, wherein the first aperture array and second aperture array are slit arrays.

4. The optical sensor (200) of claim 1 or 2, wherein the first aperture array and second aperture array are pinhole arrays.

5. The optical sensor (200) of claim 4, wherein
the apertures of the first aperture array and second aperture array are arranged in rows extending across the aperture array in a first direction (D1) such that the apertures of each row are not overlapping with apertures of any adjacent row in a second direction (D2) perpendicular to the first direction.

6. The optical sensor (200) of claim 5, wherein at each point along a second axis of the first diffractive or scattering surface (104), perpendicular to the first axis (FA), measurement light in focus at each adjacent point along the second axis belongs to a different wavelength band.

7. The optical sensor (100, 200) of any preceding claim, wherein the first diffractive or scattering surface (104) comprises a mask covering areas of the surface of the first diffractive or scattering surface outside of the first region (104a), or wherein the first diffractive or scattering surface is sized such that the first region covers the entire surface of the first diffractive or scattering surface.

8. The optical sensor (100, 200) of any preceding claim, wherein the light source comprises a plurality of sub-light sources arranged in rows, wherein spectral output of each row of sub-light sources is different, and wherein the intensity of light emitted by each row of sub-light sources is individually adjustable in order to adjust the relative intensity of each wavelength band.

9. The optical sensor (100, 200) of any preceding claim, wherein a first power of measurement light of a first wavelength band is at least double a second power of measurement light of a second wavelength band.

10. The optical sensor (100, 200) of any preceding claim, wherein the measurement spectrograph is further configured to measure the total intensity or maximum intensity of measurement light within of at least two wavelength bands received from each position of the measurement plane for generating multispectral reflectance measurements of the surface of the measurement object.

11. The optical sensor (100, 200) of any preceding claim, wherein each aperture in the first aperture array has a corresponding aperture in the second aperture array such that measurement light that passes through a given aperture in the first aperture array and is reflected from the intersection of the measurement object and the measurement plane passes only through a corresponding aperture in the second aperture array.

12. The optical sensor (100, 200) of any preceding claim, wherein each point within the first region (104a) of the first diffractive or scattering surface has a corresponding point in the measurement plane (106) and on the surface of the second diffractive or scattering surface (107) at which the same wavelength or combination of wavelengths of measurement light is in focus.

13. The optical sensor (100, 200) of any preceding claim, wherein the first diffractive or scattering surface is a surface of a diffraction grating, and/or wherein the second diffractive or scattering surface is a surface of a diffraction grating.

14. The optical sensor (100, 200) of any preceding claim, wherein the first dispersive optics comprises a first diffraction grating for dispersing measurement light, and/or wherein the second dispersive optics comprises a second diffraction grating for dispersing measurement light.

15. The optical sensor (100, 200) of any preceding claim, wherein the optical sensor is an optical sensor for simultaneously measuring spectral properties of a surface of a measurement object and the displacement or profile of the measurement object.

16. A method of measuring the displacement and/or profile of the surface of a measurement object using the optical sensor of any of claims 1 to 15, the method comprising:
measuring a peak wavelength of light within one or more wavelength bands of measurement light reflected from the intersection of the measurement plane and a surface of a measurement object; and
determining the displacement and/or profile of the surface of the measurement object based on the one or more measured peak wavelengths.

17. The method of claim 16, further comprising:
measuring a peak wavelength of light within one or more wavelength band of measurement light reflected from the intersection of the measurement plane and a surface of a measurement object at one or more different parts of the surface of the measurement object;
determining the profile of each of the one or more different part surface of the measurement object based on the one or more measured peak wavelengths; and
generating a three-dimensional model of the surface of the measurement object based on the determined profiles of different parts of the surface of the measurement object.

18. The method of claim 17, wherein the method further comprises generating an image of the surface of the measurement object based on the intensity of measurement light within each wavelength band reflected from the intersection of the different parts of the surface of the measurement object and the measurement plane.

19. A method of obtaining a multispectral image of the surface of a measurement object using the optical sensor of any of claims 1 to 15, the method comprising:
generating an image of the surface of the measurement object based on the intensity of measurement light within each wavelength band reflected from the intersection of the different parts of the surface of the measurement object and the measurement plane.

## Amended claims

### Amended claims in accordance with Rule 137(2) EPC.

1. An optical sensor (100) comprising:
a light source (101) configured to emit polychromatic measurement light, the polychromatic measurement light comprising a plurality of wavelength bands;
a first aperture array (102) arranged to receive measurement light from the light source; a first diffractive or scattering surface (104);
a first dispersive optics (103) arranged to receive measurement light passing through the first aperture array and to disperse received measurement light across a first axis (FA) on the first diffractive or scattering surface (104), wherein different wavelength bands of the plurality of wavelength bands are dispersed across a first region (104a) of the first diffractive or scattering surface from different apertures of the first aperture array such that a different wavelength or combination of wavelengths of measurement light is in focus at each point along the first axis;
a second diffractive or scattering surface (107);
an objective lens assembly (105) configured to image the first region of the first diffractive or scattering surface onto a measurement plane (106), and to focus measurement light reflected from the intersection of the measurement plane and the surface of a measurement object onto the second diffractive or scattering surface (107); a second aperture array (109);
a second dispersive optics (108) arranged to receive measurement light diffracted or scattered from the second diffractive or scattering surface and configured to disperse the received measurement light across the second aperture array (109) and focus at least part of the measurement light within the apertures of the second aperture array (109) such that measurement light of a single wavelength band passes through each aperture of the second aperture array (109); and
a measurement spectrograph (110) arranged to receive measurement light passing through the second aperture array and measure the spectral content of received measurement light within each measurement band.

2. The optical sensor (100,200) of claim 1, wherein the measurement spectrograph (110) is configured to disperse the received measurement light of each wavelength band across an image sensor (110a) such that the position on the image sensor of the peak wavelengths of received measurement light within each band corresponds to the intersection of the measurement plane and the surface of the measurement object.

3. The optical sensor (100) of claim 1 or 2, wherein the first aperture array and second aperture array are slit arrays.

4. The optical sensor (200) of claim 1 or 2, wherein the first aperture array and second aperture array are pinhole arrays.

5. The optical sensor (200) of claim 4, wherein
the apertures of the first aperture array and second aperture array are arranged in rows extending across the aperture array in a first direction (D1) such that the apertures of each row are not overlapping with apertures of any adjacent row in a second direction (D2) perpendicular to the first direction.

6. The optical sensor (200) of claim 5, wherein at each point along a second axis of the first diffractive or scattering surface (104), perpendicular to the first axis (FA), measurement light in focus at each adjacent point along the second axis belongs to a different wavelength band.

7. The optical sensor (100, 200) of any preceding claim, wherein the first diffractive or scattering surface (104) comprises a mask covering areas of the surface of the first diffractive or scattering surface outside of the first region (104a), or wherein the first diffractive or scattering surface is sized such that the first region covers the entire surface of the first diffractive or scattering surface.

8. The optical sensor (100, 200) of any preceding claim, wherein the light source comprises a plurality of sub-light sources arranged in rows, wherein spectral output of each row of sub-light sources is different, and wherein the intensity of light emitted by each row of sub-light sources is individually adjustable in order to adjust the relative intensity of each wavelength band.

9. The optical sensor (100, 200) of any preceding claim, wherein a first power of measurement light of a first wavelength band is at least double a second power of measurement light of a second wavelength band.

10. The optical sensor (100, 200) of any preceding claim, wherein the measurement spectrograph is further configured to measure the total intensity or maximum intensity of measurement light within of at least two wavelength bands received from each position of the measurement plane for generating multispectral reflectance measurements of the surface of the measurement object.

11. The optical sensor (100, 200) of any preceding claim, wherein each aperture in the first aperture array has a corresponding aperture in the second aperture array such that measurement light that passes through a given aperture in the first aperture array and is reflected from the intersection of the measurement object and the measurement plane passes only through a corresponding aperture in the second aperture array.

12. The optical sensor (100, 200) of any preceding claim, wherein each point within the first region (104a) of the first diffractive or scattering surface has a corresponding point in the measurement plane (106) and on the surface of the second diffractive or scattering surface (107) at which the same wavelength or combination of wavelengths of measurement light is in focus.

13. The optical sensor (100, 200) of any preceding claim, wherein the first diffractive or scattering surface is a surface of a diffraction grating, and/or wherein the second diffractive or scattering surface is a surface of a diffraction grating.

14. The optical sensor (100, 200) of any preceding claim, wherein the first dispersive optics comprises a first diffraction grating for dispersing measurement light, and/or wherein the second dispersive optics comprises a second diffraction grating for dispersing measurement light.

15. The optical sensor (100, 200) of any preceding claim, wherein the optical sensor is an optical sensor for simultaneously measuring spectral properties of a surface of a measurement object and the displacement or profile of the measurement object.

16. A method of measuring the displacement and/or profile of the surface of a measurement object using the optical sensor of any of claims 1 to 15, the method comprising:
measuring a peak wavelength of light within one or more wavelength bands of measurement light reflected from the intersection of the measurement plane and a surface of a measurement object; and
determining the displacement and/or profile of the surface of the measurement object based on the one or more measured peak wavelengths.

17. The method of claim 16, further comprising:
measuring a peak wavelength of light within one or more wavelength band of measurement light reflected from the intersection of the measurement plane and a surface of a measurement object at one or more different parts of the surface of the measurement object;
determining the profile of each of the one or more different part surface of the measurement object based on the one or more measured peak wavelengths; and
generating a three-dimensional model of the surface of the measurement object based on the determined profiles of different parts of the surface of the measurement object.

18. The method of claim 17, wherein the method further comprises generating an image of the surface of the measurement object based on the intensity of measurement light within each wavelength band reflected from the intersection of the different parts of the surface of the measurement object and the measurement plane.

19. A method of obtaining a multispectral image of the surface of a measurement object using the optical sensor of any of claims 1 to 15, the method comprising:
generating an image of the surface of the measurement object based on the intensity of measurement light within each wavelength band reflected from the intersection of the different parts of the surface of the measurement object and the measurement plane.
